# EUROPÄISCHE PATENTANMELDUNG

(11) **EP 3 270 025 A1**
(43) Veröffentlichungstag der Anmeldung: **17.01.2018**
(21) Anmeldenummer: 16179469.8
(22) Anmeldetag: 14.07.2016
(51) Int. Cl.: F16L 11/112, B29C 53/78, F16L 11/118, F16L 11/127, F16L 11/24

(54) **SCHLAUCHLEITUNG FÜR DEN TRANSPORT ABRASIVER MEDIEN SOWIE VERFAHREN UND VORRICHTUNG ZU DEREN HERSTELLUNG**

(71) Anmelder: Masterflex SE, 45891 Gelsenkirchen (DE)
(72) Erfinder: Nüßen, Stefan, 45879 Gelsenkirchen (DE); Kapteina, Tanja, 44651 Herne (DE); Jacobi, Joachim, 44803 Bochum (DE)
(74) Vertreter: Uexküll & Stolberg

(57) **Zusammenfassung**

Die vorliegende Erfindung betrifft eine Schlauchleitung (1) für den Transport abrasiver Medien mit einem in oder an der Schlauchwandung (2) verlaufenden elektrisch leitfähigen Verstärkungselement (5), das sich in Schlauchrichtung (6) erstreckt, wobei eine Einlage (7) aus elektrisch leitendem Material zumindest teilweise in die Schlauchwandung (2) eingebettet ist und sich beabstandet zum Verstärkungselement (5) in Schlauchrichtung (6) erstreckt.

## Beschreibung

Die Erfindung betrifft eine Schlauchleitung für den Transport abrasiver Medien mit einem in oder an der Schlauchwandung verlaufenden elektrisch leitfähigen Verstärkungselement, das sich in Schlauchrichtung erstreckt. Ferner betrifft die Erfindung Verfahren und eine Vorrichtung zur deren Herstellung.

Auf vielen technischen Gebieten gibt es die Anforderung, Feststoffe, Gase oder Flüssigkeiten zu fördern oder abzusaugen. Die hierfür eingesetzten Schlauchleitungen sind oftmals hohen Belastungen ausgesetzt, denn das transportierte Medium kann zu einem erheblichen Abrieb der Innenseite der Schlauchwandung führen. Dies führt nach einem gewissen Zeitraum zu einer Beschädigung der Schlauchwandung. Infolgedessen kann es zu einer Leckage der Schlauchleitung kommen. Häufig wird noch verlangt, dass die Schlauchleitungen ein gewisses Maß an Flexibilität mit sich bringen, was dazu führt, dass die Leitungen auch häufigen Biegebeanspruchungen ausgesetzt sind. Für diese Einsatzzwecke sind insbesondere Schlauchleitungen mit einer helix- bzw. schraubenförmig verlaufenden Verstärkungswendel bekannt, die hohe Flexibilität und Widerstandsfähigkeit kombinieren. Es handelt sich hierbei insbesondere um extrudierte Kunststoffprofile mit verdreh- und verschiebefest eingegossenem Federstahldraht.

Das Auftreten von Leckage infolge von Verschleiß durch Abrieb oder durch einen nicht erkannten Bruch einer Schlauchleitung oder einer Verstärkungswendel ist im Allgemeinen mit hohen Kosten und erheblichem Arbeitsaufwand zur Behebung des Schadensfalls verbunden. Da der Verschleiß der Schlauchinnenwand von außen nicht erkennbar ist, wird oftmals ein rechtzeitiger Austausch der Schlauchleitung nicht vorgenommen.

Der vorliegenden Erfindung liegt daher die Aufgabe zugrunde, eine Schlauchleitung bereitzustellen, die es ermöglicht, einen Verschleiß der Schlauchleitung rechtzeitig vor dem Auftreten einer Leckage festzustellen.

Diese Aufgabe wird durch eine Schlauchleitung mit den Merkmalen des Anspruchs 1 sowie durch Verfahren mit den Merkmalen der Ansprüche 7 oder 10 und durch eine Vorrichtung mit den Merkmalen des Anspruchs 13 gelöst.

Erfindungsgemäß ist vorgesehen, dass eine Einlage aus elektrisch leitendem Material zumindest teilweise in die Schlauchwandung eingebettet ist und sich beabstandet zum Verstärkungselement in Schlauchrichtung erstreckt.

Die Einlage aus elektrisch leitendem Material bildet einen elektrischen Leiter, der sich in einem Abstand zu dem Verstärkungselement in Schlauchrichtung bzw. in Längsrichtung des Schlauches erstreckt, so dass die Einlage und das Verstärkungselement nicht elektrisch miteinander verbunden sind bzw. elektrisch voneinander isoliert sind. Da sowohl das Verstärkungselement als auch die Einlage elektrisch leitend sind, können diese in einen Überwachungsschaltkreis integriert werden. Bei einem solchen Überwachungssystem werden nach Verlegung der Schlauchleitung das erste Ende der Schlauchleitung und das erste Ende der Einlage an einen elektrischen Widerstands- oder Durchgangsmesser angeschlossen. Da die Einlage und das Verstärkungselement in der Schlauchwandung elektrisch voneinander getrennt sind, werden das Verstärkungselement und die Einlage am zweiten Ende oder einem beliebigen anderen Abschnitt elektrisch miteinander verbunden, um den elektrischen Schaltkreis zu schließen. Beispielsweise können das Verstärkungselement und die Einlage am zweiten Ende durch eine Klammer, einen Kontaktschuh oder ein anderes Kontaktelement elektrisch miteinander verbunden werden. Des Weiteren kann beispielsweise eine Nadel in die Schlauchleitung, insbesondere in das elektrisch leitende Material gestochen werden und dann eine elektrische Verbindung zwischen der Nadel und dem Verstärkungselement (beispielsweise durch einen Draht oder ein Kabel) hergestellt werden. Möglich ist auch ein elektrisch leitender Klebestreifen. Kommt es infolge starken Abriebs der Innenwand der Schlaucheinleitung oder infolge eines Bruches der Schlauchleitung zu einer Beschädigung des Verstärkungselements oder der Einlage, verändert sich auch der gemessene elektrische Widerstand, was durch den Widerstandsmesser registriert und angezeigt werden kann. Anwender erhalten so frühzeitig eine Meldung über den Zustand der Schlauchleitung und können entsprechende Gegenmaßnahmen treffen. Ein Bruch der elektrischen Verbindung kann auch leicht mit einem Durchgangsmesser- bzw. einem Durchgangsprüfer erfasst werden.

Das Verstärkungselement kann vollständig in die Schlauchwandung eingebettet sein, so dass es durch die Schlauchwandung von dem Schlauchinneren und dem Schlauchäußeren getrennt ist. Es ist auch möglich, dass das Verstärkungselement nur teilweise in die Schlauchwandung eingebettet ist und ein Abschnitt des Verstärkungselements zum Schlauchinneren oder Schlauchäußeren hin freiliegt. Auch die Einlage aus elektrisch leitendem Material kann so in die Schlauchwandung eingebettet sein, dass die Schlauchwandung die Einlage vollständig umgibt. Es ist aber auch möglich, dass die Einlage nur teilweise von der Schlauchwandung aufgenommen ist und beispielsweise ein innerer Abschnitt der Einlage zum Schlauchinneren hin freiliegt. Dazu kann die Einlage auch an der Innenseite der Schlauchwandung festgelegt sein.

Erfindungsgemäß ist vorgesehen, dass das elektrisch leitende Material und/oder das Verstärkungselement vom Schlauchinneren durch eine Verschleißschicht getrennt sind. Die Verschleißschicht kann Teil der Einlage sein und/oder durch einen Abschnitt der Schlauchwandung gebildet werden. Durch Wahl der Dicke der Verschleißschicht kann ein vorbestimmtes Maß an Abnutzung festgelegt werden, ab dem die Verschleißwarnfunktion aktiv werden soll.

Grundsätzlich ist es möglich, dass die Schlauchwandung aus mehreren Lagen oder Schichten in Sandwich-Bauweise besteht. Hierzu können mehrere Folienlagen übereinander gelegt werden. Das elektrisch leitende Material kann zwischen zwei der Lagen angeordnet sein. Vorteilhafterweise ist das elektrisch leitende Material durch ein oder mehrere Schichten oder durch eine eigene Verschleißschicht von der Innenseite des Schlauches getrennt. Gleichermaßen kann das elektrisch leitende Material an der Innenseite des Schlauches angebracht sein. Das Verstärkungselement kann ebenfalls zwischen zwei Schichten angeordnet sein. Es ist aber auch möglich, das Verstärkungselement an der Außenseite oder Innenseite des Schichtzusammenbaus festzulegen, beispielsweise anzuschweißen.

Vorzugsweise besteht die Schlauchleitung aus thermoplastischem Kunststoff. Lediglich beispielshaft und nicht einschränkend seien hierzu thermoplastische Elastomere auf Urethanbasis (TPU). d.h. Polyurethan (PU), wie z.B. Polyether-Polyurethan und Polyester-Polyurethan, Polyvinylchlorid (PVC) oder Polyethylen (PE) genannt, aber auch thermoplastische Vulkanisate (TPV), wie Santropene. Weitere geeignete Materialien stellen insbesondere thermoplastische Elastomere dar, wie:
- TPA (Thermoplastische Copolyamide)
- TPC (Thermoplastische Polyesterelastomere / Thermoplastische Copolyester)
- TPO (Thermoplastische Elastomere auf Olefinbasis), z.B. PP/EPDM
- TPS (Styrol-Blockcopolymere, z.B. SBS, SEBS, SEPS, SEEPS und MBS).

Nach einer bevorzugten Ausführungsform der Erfindung weist die Schlauchleitung eine helix- bzw. schraubenlinienförmig verlaufende Werkstoffbahn, die die Schlauchwandung bildet oder zumindest eine Schicht derselben, sowie ein helix- bzw. schraubenlinienförmig verlaufendes Verstärkungselement auf, das an oder in der Schlauchwandung befestigt ist. Die Werkstoffbahn, die zur Bildung der Schlauchleitung gewendelt wird, ist vorzugsweise eine extrudierte Profilfahne aus thermoplastischem Kunststoff.

Derartige Schlauchleitungen mit helixförmig verlaufender Verstärkungswendel können in der Weise hergestellt werden, dass eine Werkstoffbahn, an der die Verstärkungswendel befestigt ist, schraubenlinienförmig aufgewickelt wird. Ein bekanntes Verfahren sieht vor, dass eine als Profilfahne extrudierte Werkstoffbahn um einen Fertigungsdorn oder dergleichen aufgewickelt und der bereits auf den Fertigungsdorn aufgewickelte Teil der Bahn von diesem axial abgezogen werden, so dass die Bahn helixförmig aufgewickelt wird. Der Randbereich des neu auf den Fertigungsdorn auftreffenden Bahnabschnitts wird mit dem Randbereich des Bahnabschnitts verbunden, der den Dorn bereits einmal umschlungen hat. Auf diese Weise kann eine Schlauchleitung gebildet werden, die mit einem helixförmig verlaufenden Verstärkungselement versehen ist. Die Längskantenabschnitte benachbarter Wendelwicklungen bzw. die gegenüberliegenden Randbereiche der Werkstoffbahn können überlappend miteinander verbunden werden.

Neben einer extrudierten Profilfahne kann auch ein Folienstreifen als Werkstoffbahn bereitgestellt werden, wobei der Folienstreifen derart gewendelt wird, dass benachbarte Randbereiche überlappen. In bevorzugter Weise werden die überlappenden Randbereiche durch Verschweißen miteinander verbunden. Erfindungsgemäß kann sich das elektrisch leitende Material axial parallel zur Schlauchachse erstrecken. Eine bevorzugte Ausführungsform sieht vor, dass sich das elektrisch leitende Material helix- bzw. schraubenlinienförmig in Schlauchrichtung erstreckt. Nach einer weiteren Ausführungsform der Erfindung erstreckt sich das Verstärkungselement im Wesentlichen parallel zu dem elektrisch leitenden Material in Schlauchrichtung bzw. entlang der Schlauchachse, wobei ein im Wesentlichen konstanter Abstand zwischen den beiden elektrischen Leitern, d.h. der Einlage und dem Verstärkungselement, erhalten bleibt.

Eine besonders bevorzugte Ausführungsform sieht ein helixförmig verlaufendes Verstärkungselement vor, wobei sich das elektrisch leitende Material ebenfalls helixförmig in Schlauchrichtung erstreckt. Die beiden Helices können parallel zueinander verlaufen, beispielsweise in radialer Richtung, wobei die eine Helix die andere Helix umgibt.

Eine weitere Ausführungsform sieht vor, dass das helixförmig verlaufende Verstärkungselement und das helixförmig verlaufende elektrisch leitende Material axial versetzt zueinander sind, so dass in einer Draufsicht auf die Schlauchachse, die Helix des einen Elements zwischen benachbarten Windungen des anderen Elements verläuft. Dabei können die Helices radial versetzt zueinander verlaufen oder im Wesentlichen den gleichen Abstand zur Schlauchachse aufweisen, so dass sie sich nach Art einer Doppelhelix oder Doppelwindung mit parallelen Spiralen in Schlauchrichtung erstrecken. Auf diese Weise lassen sich besonders zuverlässige Messergebnisse des elektrischen Widerstandes und somit eine besonders zuverlässige Verschleißwarnung und/oder Bruchwarnung erzielen.

Das Verstärkungselement ist vorzugsweise ein Draht oder eine Drahtspirale, wie z.B. ein Federstahldraht. Der Draht oder die Drahtspirale können in einer Ausführungsform mit einem Kunststoff ummantelt oder beschichtet sein, um ein Anbringen des Verstärkungselements auf der Schlauchleitung mittels Verschweißen, z.B. bei der Herstellung von Schlauchleitungen mit aufgesetzter Stützwendel, zu erleichtern. In einer weiteren Ausführungsform umfasst das Verstärkungselement anstelle des Drahtes oder der Drahtspirale einen elektrisch leitfähigen Kunststoff. Hierzu sind grundsätzlich sämtliche thermoplastische Kunststoffe geeignet, die sich elektrisch leitfähig ausstatten lassen, wie es weiter unten im Zusammenhang mit der Einlage aus elektrisch leitfähigem Material beschrieben ist. Bevorzugt sind rigide Polymere, wie z.B. Polyamid (PA), Polypropylen (PP) oder Hart-PVC.

Erfindungsgemäß kann das elektrisch leitende Material einen Metalldraht und/oder elektrisch leitfähigen Kunststoff umfassen. Grundsätzlich kommen jedoch auch andere geeignete Materialien in Betracht, sofern sie über die erforderliche elektrische Leitfähigkeit verfügen.

Eine in die Schlauchwandung eingebettete Drahtlitze hat sich dabei als wirtschaftliche und effiziente Lösung herausgestellt. Kommt es während des Einsatzes der Schlauchleitung zum Abrieb der unter der Litze befindlichen Verschleißschicht, wird die Litze zunehmend freigelegt. Die einzelnen Adern der Litze werden dann durch das Transportmedium kurzfristig durchtrennt, wodurch der elektrische Durchgang durch Litze und Verstärkungselement unterbrochen wird. Der Widerstandsmesser registriert eine Veränderung des elektrischen Widerstandes und ist so eingerichtet, hierzu eine Warnung auszugeben. Das gleiche gilt für einen Bruch des Verstärkungselements oder des elektrischen Leiters. Dieser kann auch mit einem Durchgangsprüfer leicht erfasst werden.

Erfindungsgemäß kann auch ein elektrisch leitfähiger Kunststoff verwendet werden. So genannte leitfähige Polymere sind Kunststoffe mit elektrischer Leitfähigkeit, die vergleichbar mit der von Metallen ist. Die elektrische Leitfähigkeit von Kunststoffen, wie z.B. PE, PU oder PVC, kann beispielsweise durch Compoundierung modifiziert werden, in dem man Additive, wie Kohlefasern, Graphit, Metallpulver, Kohlenstoffnanoröhren (carbon nanotubes) oder Stahlfasern der Kunststoffschmelze beimischt. Es ist daher möglich, für die Wandung der Schlauchleitung und für die elektrisch leitende Einlage im Wesentlichen den gleichen Kunststoff vorzusehen, wobei sich Wandung und Einlage lediglich hinsichtlich der elektrischen Leitfähigkeit unterscheiden, wenn der Einlage entsprechende Additive zugegeben werden. So sieht eine weitere Ausführungsform der Erfindung vor, dass die Einlage und die Schlauchwandung aus dem gleichen Kunststofftyp bestehen, was hinsichtlich der Haftung zwischen den beiden Kunststoffen von Vorteil ist.

Eine weitere Ausführungsform der Erfindung sieht vor, dass das elektrisch leitende Material in radialer Richtung näher zur Schlauchachse bzw. näher zur Schlauchinnenwand liegt als das Verstärkungselement. Der zunehmende Abrieb der inneren Schlauchwand wirkt sich zunächst auf das elektrisch leitende Material aus, bevor das Verstärkungselement der Schlauchleitung beschädigt wird. Eine derartige Anordnung bietet den besonderen Vorteil, dass die Schlauchleitung nach einer Verschleißwarnung, die durch ein vollständiges oder teilweises Durchtrennen des elektrisch leitenden Materials der Einlage ausgelöst wird, noch eine gewisse Zeit weiterbetrieben werden kann, bevor es zum Ausfall (Leckage) der Schlauchleitung kommt. Auf diese Art und Wiese erhält man einen sog. zeitlichen Puffer und es kann rechtzeitig auf einen baldigen Produktausfall reagiert und ein Wartungstermin eingeplant werden, bevor es zum spontanen Stillstand durch einen verschlissenen Schlauch kommt. Es hat sich diesbezüglich als besonders vorteilhaft herausgestellt, wenn das elektrisch leitende Material in radialer Richtung zwischen dem Verstärkungselement und dem Schlauchinneren bzw. der Schlauchlängsachse liegt.

In Weiterbildung des Erfindungsgedankens ist ferner vorgesehen, dass das Verstärkungselement und das elektrisch leitende Material durch eine Isolierschicht voneinander getrennt sind. Eine Isolierschicht stellt nicht nur die Funktionssicherheit des elektrischen Schaltkreises sicher, sondern über die Dicke der Isolierschicht kann auch die Dauer des oben beschriebenen zeitlichen Puffers gesteuert werden.

Gemäß einem ersten Aspekt sieht das erfindungsgemäße Verfahren zur Herstellung einer Werkstoffbahn für eine Schlauchleitung aus thermoplastischem Kunststoff für abrasive Medien, insbesondere wie sie hierin beschrieben sind, vor, dass eine Kunststoffschmelze in einen Extrusionskopf zur Bildung einer extrudierten Werkstoffbahn geleitet und ein elektrisch leitfähiges Verstärkungselement beim Extrudieren der Werkstoffbahn mit der Werkstoffbahn verbunden wird. Erfindungsgemäß wird ein elektrisch leitendes Material zur Bildung einer Einlage in der Werkstoffbahn in den Extrusionskopf geleitet und beim Extrudieren der Werkstoffbahn in einem definierten Abstand zum Verstärkungselement in die Werkstoffbahn eingebracht.

Wie in Bezug auf die Schlauchleitung bereits erläutert wurde, können das Verstärkungselement und die Einlage vollständig in die Werkstoffbahn eingebettet werden oder nur teilweise.

Eine weitere Ausführungsform der Erfindung sieht vor, dass die Einlage aus elektrisch leitfähigem thermoplastischem Kunststoff besteht, wobei die Werkstoffbahn und die Einlage durch Coextrusion zusammengeführt werden. Wie bereits beschrieben wurde, können die Eigenschaften des Kunststoffes durch Compoundierung modifiziert werden. Bei der Coextrusion kommt neben dem Hauptextruder ein weiterer Extruder zum Einsatz, so dass wenigstens zwei Kunststoffschmelzen vor dem Verlassen der Extrusionsvorrichtung bzw. einer Profilschablone zusammengeführt werden. Die beiden Extrudate werden in den Extrusionskopf geleitet und durch den Druck der austretenden Materialien durch das Werkzeug bzw. die Schablone gepresst. Der Eintrag des elektrisch leitfähigen Kunststoffes in die Werkstoffbahn erfolgt an vordefinierte Stelle. Das Ergebnis ist beispielsweise eine Werkstoffbahn mit einem elektrisch leitfähigen Streifen.

Nach einer weiteren Ausführungsform der Erfindung besteht der elektrische Leiter aus Metalldraht, vorzugsweise aus einer Litze. Die Litze wird in den Extrusionskopf geführt, und das Extrudat wird zumindest teilweise auf die Litze aufextrudiert.

Anstatt das Verstärkungselement und das elektrisch leitende Material beim Extrudieren des Kunststoffes mit diesem zu verbinden, kann gemäß einem zweiten Aspekt auch ein alternatives Verfahren zur Anwendung kommen. Dieses Verfahren zur Herstellung einer Schlauchleitung für abrasive Medien sieht vor, dass eine bereits extrudierte Werkstoffbahn aus thermoplastischem Kunststoff helixförmig zur einer Schlauchleitung aufgewickelt wird und benachbarte Längskantenabschnitte der Werkstoffbahn überlappend miteinander verbunden werden, z.B. durch Verschweißen, und ein elektrisch leitfähiges Verstärkungselement mit dem Kunststoff derart verbunden wird, dass sich das Verstärkungselement helixförmig in Schlauchrichtung erstreckt. Erfindungsgemäß ist vorgesehen, dass ein elektrisch leitendes Material an der Schlauchleitung derart angebracht wird, dass es sich beabstandet zum Verstärkungselement in Schlauchrichtung erstreckt, wobei zumindest eines von dem Verstärkungselement und dem elektrisch leitenden Material an der extrudierten Werkstoffbahn, also nach der Extrusion derselben, angebracht wird.

Für dieses Verfahren stehen mehrere Möglichkeiten zur Verfügung. Beispielsweise kann das Verstärkungselement, z.B. die hierin beschriebene Drahtspirale, mit der Kunststoffbahn spiral- bzw. helixförmig aufgewickelt werden, wobei das Verstärkungselement dabei zwischen sich überlappenden Längskantenabschnitten der Werkstoffbahn verlegt und dort durch Verbinden der Längskantenabschnitte festgelegt wird. Dabei befindet sich das Verstärkungselement unmittelbar zwischen aneinander angrenzenden Abschnitten der Werkstoffbahnen in einer Art Tasche und es bedarf keiner zusätzlichen Fixierung des Verstärkungselements, beispielsweise durch Anschweißen desselben. Ebenso kann mit dem elektrisch leitenden Material verfahren werden.

Es ist ebenso möglich, das Verstärkungselement, vorzugsweise einen beschichteten Draht, an der extrudierten Werkstoffbahn durch Verschweißen zu befestigen. So kann die Werkstoffbahn helixförmig zu einer Schlauchleitung aufgewickelt und benachbarte Längskantenabschnitte der Werkstoffbahn wie oben beschrieben überlappend miteinander verbunden werden, wobei das Verstärkungselement auf die bereits verbundenen Schlauchabschnitte oder auf andere Abschnitte der Schlauchleitung aufgeschweißt wird. Ebenso kann mit dem elektrisch leitenden Material verfahren werden.

In Weiterbildung des Erfindungsgedankens kann das eine von dem Verstärkungselement und dem elektrisch leitenden Material bei der Extrusion der Werkstoffbahn mit dieser verbunden, beispielsweise zumindest teilweise in diese eingebettet werden, und das andere von dem Verstärkungselement und dem elektrisch leitenden Material an der extrudierten Werkstoffbahn angebracht werden. Das elektrisch leitende Material kann beispielsweise im Rahmen der Extrusion der Werkstoffbahn wie oben beschrieben unmittelbar in diese eingebracht werden, wogegen das Verstärkungselement erst nach der Extrusion mit der der Werkstoffbahn verbunden wird. Diese Vorgehensweise kann selbstverständlich auch vice versa erfolgen.

Im Rahmen des erfindungsgemäßen Verfahrens ist ferner vorgesehen, dass die Schlauchleitung zumindest abschnittsweise aus mehreren Kunststoffschichten oder Lagen gebildet wird, wobei das Verstärkungselement und/oder das elektrisch leitende Material zumindest teilweise zwischen zwei aneinander grenzende Kunststoffschichten eingebracht wird. Diese Vorgehensweise erweist sich insbesondere bei Schlauchleitungen, die in Sandwichbauweise aufgebaut sind, also vorteilhaft, da auf aufwendige Fixierungsmechanismen für das Verstärkungselement und/oder das elektrisch leitende Material verzichtet werden kann.

Die Erfindung betrifft ferner eine Vorrichtung zur Herstellung von Schlauchleitungen aus thermoplastischem Kunststoff mit einem zumindest teilweise in die Schlauchwandung eingebetteten Verstärkungselement, insbesondere zur Herstellung von Schlauchleitungen, wie sie hierin beschrieben sind, insbesondere mittels eines Verfahrens gemäß dem ersten Aspekt, wie es hierin beschrieben ist. Die Vorrichtung umfasst einen Extrusionskopf zum Extrudieren einer Werkstoffbahn, wobei der Extrusionskopf wenigstens einen Zufuhrkanal für fließfähigen Kunststoff aus wenigstens einem Extruder aufweist, wobei das Verstärkungselement in den Extrusionskopf geführt wird, um das Verstärkungselement beim Extrudieren der Werkstoffbahn zumindest teilweise in den Kunststoff einzubetten. Ein erster Führungsabschnitt ist dazu eingerichtet, das Verstärkungselement in dem und/oder in den Extrusionskopf zu führen, so dass das Verstärkungselement in einer definierten bzw. vorbestimmten Lage in den Kunststoff integriert wird. Erfindungsgemäß ist ein weiterer, zweiter Führungsabschnitt für einen elektrischen Leiter (Einlage), wie eine Drahtlitze oder dergleichen, vorgesehen. Der elektrische Leiter wird in den Extrusionskopf geleitet, um zumindest teilweise in den Kunststoff eingebettet zu werden. Der zweite Führungsabschnitt ist derart ausgebildet, dass der elektrische Leiter entlang der Werkstoffbahn in einem definierten Abstand zum Verstärkungselement in den Kunststoff eingebettet wird.

Eine weitere Ausführungsform der Erfindung sieht vor, dass der erste und zweite Führungsabschnitt vorzugsweise parallel zueinander angeordnete Durchführungen für das Verstärkungselement und den elektrischen Leiter umfassen. Die Führungsabschnitte können beispielsweise durch zwei Durchführungen in einer Einlaufführung nach Art eines Doppelröhrchens in den Extruder geführt werden. Dabei werden die Führungsabschnitte derart angeordnet, dass das Verstärkungselement und der elektrische Leiter in einem vorbestimmten Abstand zueinander gehalten werden, wenn sie in den Kunststoff eingebettet werden.

Erfindungsgemäß ist bevorzugt, dass die Werkstoffbahn als Profilfahne extrudiert wird. Um den extrudierten Kunststoff auszuformen, ist eine Profilschablone vorgesehen, die Teil des Extrusionskopfes ist oder an diesem angebracht ist.

Die vorliegende Erfindung wird im Folgenden anhand lediglich bevorzugter Ausführungsbeispiele und den Zeichnungen näher erläutert. Es zeigen:
- Fig. 1: eine Schlauchleitung nach einer ersten Ausführungsform der Erfindung in einer Schnittansicht;
- Fig. 2: schematisch die Überwachung einer Schlauchleitung nach einer zweiten Ausführungsform der Erfindung;
- Fig. 3: eine Schlauchleitung nach einer dritten Ausführungsform der Erfindung in einer Schnittansicht; und
- Fig. 4: eine erfindungsgemäße Vorrichtung in einer Schnittansicht.

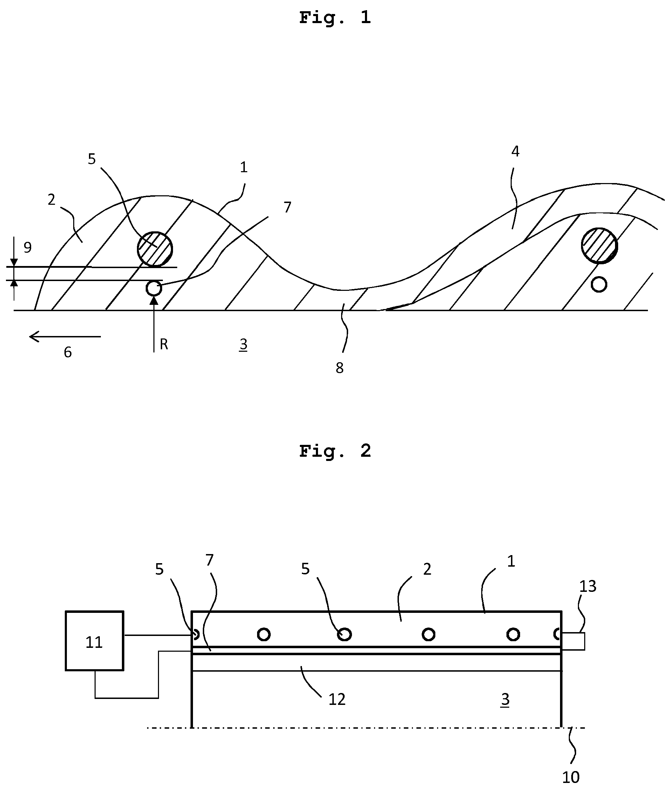

Die Figur 1 zeigt einen Abschnitt einer Schlauchleitung 1 bzw. eines Schlauches mit einer Schlauchwandung 2, die das Schlauchinnere 3 umgibt. Die Schlauchleitung 1 weist eine helixförmig verlaufende Werkstoffbahn 4 auf, die die Schlauchwandung 2 bildet. Bei der Werkstoffbahn 4 handelt es sich um eine schraubenlinienförmig aufgewendelte extrudierte Profilfahne mit eingebettetem Verstärkungselement 5 in Form einer Drahtspirale, die sich ebenfalls helixförmig in Schlauchrichtung bzw. in Längsrichtung 6 der Schlauchleitung 1 erstreckt. Das Verstärkungselement 5 ist elektrisch leitend.

Eine Einlage 7 aus elektrisch leitendem Material in Form einer Drahtlitze ist ebenfalls in die Schlauchwandung 2 eingebettet. Die Litze 7 liegt in radialer Richtung R näher zur Schlauchinnenwand 8 bzw. zur Schlauchlängsachse als das Verstärkungselement 5. Im dargestellten Ausführungsbeispiel folgt die Einlage 7 in einem Abstand 9 in paralleler Weise dem Verlauf des Verstärkungselements 5 und erstreckt sich helixförmig um die Schlauchlängsachse in Längsrichtung des Schlauches.

Schläuche der dargestellten Art werden insbesondere zum Transport von abrasiven Medien verwendet. Je nach Bedarf kann der Schlauch auf die gewünschte Länge geschnitten werden. Infolge von Verschleiß kann die Dicke der Schlauchwandung 2 abnehmen, so dass es zur Leckage kommt. Auch im Rahmen der Verlegung oder bei dynamischer Bewegung im Betrieb können derartige Schläuche Belastungen von außen, wie beispielsweise Biegebelastungen, ausgesetzt werden. Dabei kann es zu einem Bruch der Schlauchleitung und insbesondere der Verstärkungswendel kommen. Die Figur 2 zeigt hierzu ein System zur Verschleißwarnung bei einer erfindungsgemäßen Schlauchleitung.

Die hier dargestellte Schlauchleitung 1 ist auf das gewünschte Maß gekürzt und besitzt wie die Schlauchleitung in der Figur 1 eine helixförmig verlaufende Werkstoffbahn und ein entsprechend verlaufendes Verstärkungselement 5. Die Einlage 7 verläuft bei dieser Ausführungsform jedoch parallel zur Längsachse 10 der Schlauchleitung 1. Das linksseitige Ende der Schlauchwandung 2 liegt frei. Das Ende des Verstärkungselements 5 und das Ende der Einlage 7 werden mit einem Widerstandsmessgerät 11 verbunden. Um den elektrischen Schaltkreis zu schließen, werden am anderen Ende der Schlauchleitung 1 das Verstärkungselement 5 und die Einlage 7 elektrisch miteinander verbunden. Bei dem hier dargestellten Ausführungsbeispiel wird eine elektrisch leitende Klammer 13 an dem Ende der Schlauchleitung 1 befestigt, so dass die Klammer 13 mit dem Verstärkungselement 5 und mit der Einlage 7 in Kontakt tritt und den elektrischen Schaltkreis schließt. Alternativ kann auch eineNadel in das z.B. stirnseitige Ende der Einlage 7 gesteckt werden und dann z.B. über ein kleines Kabel mit dem Verstärkungselement 5 verbunden werden.

Der Abschnitt der Wandung zwischen dem Schlauchinneren 3 und der Einlage 7 dient als Verschleißschicht 12. Kommt es infolge von Verschleiß zu einer Verringerung der Wanddicke der Schlauchwandung 2, wird zunächst die Einlage 7, die in Form einer Drahtlitze ausgebildet ist, freigelegt, bevor es zu einer Beschädigung des Verstärkungselement 5 kommt. Infolge weiterer Abrasion werden einzelne Adern der Litze durchtrennt, wodurch sich der gemessene elektrische Widerstand ändert. Dies kann durch das Widerstandsmessgerät 11 angezeigt werden. Der Anwender erhält so eine frühzeitige Warnung vor einer drohenden Leckage. Dabei wirkt die Materialschicht zwischen dem Verstärkungselement 5 und der Einlage 7 effektiv als zeitlicher Puffer. Kommt es zu einem Bruch der Schlauchleitung 1 und/oder wird das Verstärkungselement 5 oder die Einlage 7 beschädigt, erhält man ebenfalls eine entsprechende Rückmeldung. Statt einer Klammer sind auch andere elektrisch leitende Mittel möglich, um das Verstärkungselement mit der Einlage elektrisch zu verbinden. Beispielsweise kann am anderen Ende der Schlauchleitung 1 ein elektrisch leitender Klebestreifen oder dergleichen angebracht werden, der die Enden des Verstärkungselements 5 und der Einlage 7 elektrisch leitend miteinander verbindet.

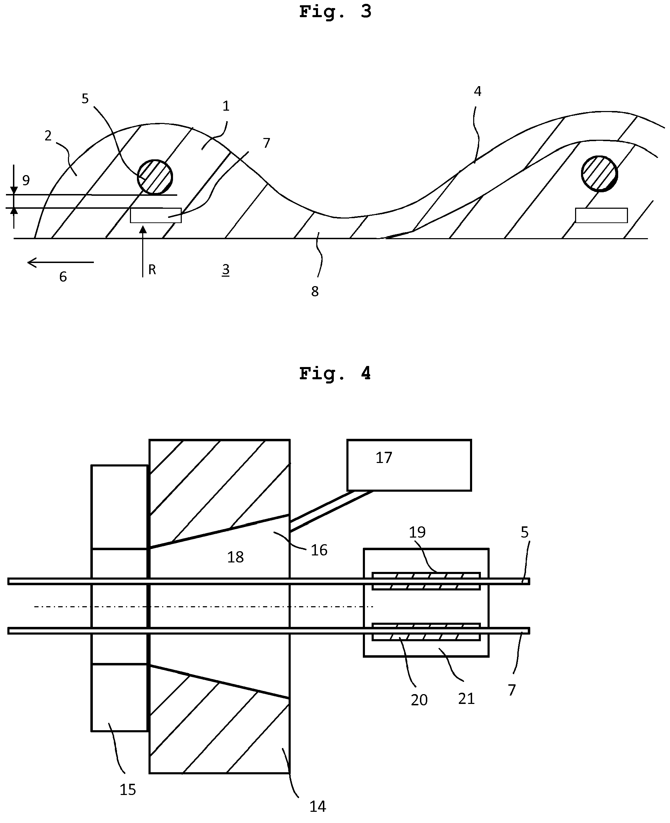

Die Schlauchleitung 1 in der Figur 3 ist im Wesentlichen genauso aufgebaut wie die Schlauchleitung aus Figur 1. Statt aus einer Drahtlitze besteht die Einlage 7 aus einem elektrisch leitenden Material in Form von extrudiertem Kunststoff, der zusammen mit der Werkstoffbahn 4 coextrudiert und dabei in die Werkstoffbahn 4 eingebracht wurde. Der Kunststoff der Einlage 7 entspricht bei dem hier dargestellten Ausführungsbeispiel im Wesentlichen dem der Schlauchwandung 2 bzw. der Werkstoffbahn 4, wurde aber durch die Zugabe von Additiven hinsichtlich seiner elektrischen Leitfähigkeit modifiziert. Kommt es infolge zunehmenden Verschleißes zu einer Beschädigung der Einlage, so ändert sich auch hier der gemessene Widerstand des bereits angesprochenen elektrischen Schaltkreises und gibt Rückschluss auf den Zustand der Schlauchleitung 1.

Die Figur 4 zeigt eine Vorrichtung 14 zum Extrudieren von Kunststoff in Form eines Extrusionskopfes mit einer Profilschablone 15. Der Extrusionskopf 14 besitzt einen Einlass 16 für ein Extrudat in Form geschmolzenen Kunststoffes, der von einem Extruder 17 bereitgestellt wird. Ein Kanal 18 durchläuft den Extrusionskopf 14. Das Extrudat durchfließt den Kanal 18, wird in die Profilschablone 15 geleitet und zu einer Profilfahne geformt.

Im Rahmen des Extrusionsprozesses soll auch das Verstärkungselement 5 in die extrudierte Werkstoffbahn eingebettet werden. Hierzu wird das Verstärkungselement 5 (hier ein Draht) in den Kanal 18 des Extrusionskopfes 14 geführt und von dem Extrudat umgeben, so dass das Verstärkungselement 5 nach Verlassen der Profilschablone 15 in den extrudierten Kunststoff eingebettet ist. Die korrekte Lage des Verstärkungselements 5 in der extrudierten Werkstoffbahn bzw. in dem Kanal 18, wo das Verstärkungselement 5 in den Kunststoff eingeschmolzen wird, wird durch einen ersten Führungsabschnitt 19 sichergestellt.

Ein elektrischer Leiter bzw. eine Einlage 7 aus elektrisch leitendem Material soll ebenfalls und in einer definierten Lage relativ zu dem Verstärkungselement 5 in die Werkstoffbahn eingebettet werden. Der elektrische Leiter 7 umfasst eine Drahtlitze, die parallel zum Verstärkungselement 5 in den Extrusionskopf 14 geführt und in den Kunststoff eingeschmolzen wird. Die relative Lage der Einlage 7 zum Verstärkungselement 5 wird durch einen zweiten Führungsabschnitt 20 sichergestellt, der die Einlage 7 parallel zum Verstärkungselement 5 führt. Der erste Führungsabschnitt 19 und der zweite Führungsabschnitt 20 werden durch zwei Durchlässe in einem hülsenartigen Element 21 gebildet. Das hülsenartige Element 21 hat die Form eines Doppelröhrchens.

### Bezugszeichenliste

- 1: Schlauchleitung
- 2: Schlauchwandung
- 3: Schlauchinneres
- 4: Werkstoffbahn
- 5: Verstärkungselement
- 6: Längsrichtung (Schlauchrichtung)
- 7: Einlage aus elektrisch leitendem Material
- 8: Schlauchinnenwand
- 9: Abstand zwischen Verstärkungselement und Einlage
- 10: Längsachse der Schlauchleitung
- 11: Widerstandmessgerät
- 12: Verschleißschicht
- 13: Klammer
- 14: Extrusionsvorrichtung
- 15: Profilschablone
- 16: Einlass
- 17: Extruder
- 18: Kanal
- 19: erster Führungsabschnitt
- 20: zweiter Führungsabschnitt
- 21: Doppelröhrchen

## Patentansprüche

1. Schlauchleitung (1) für den Transport abrasiver Medien mit einem in oder an der Schlauchwandung (2) verlaufenden elektrisch leitfähigen Verstärkungselement (5), das sich in Schlauchrichtung (6) erstreckt,
**dadurch gekennzeichnet, dass** eine Einlage (7) aus elektrisch leitendem Material zumindest teilweise in die Schlauchwandung (2) eingebettet ist und sich beabstandet zum Verstärkungselement (5) in Schlauchrichtung (6) erstreckt.

2. Schlauchleitung nach Anspruch 1, **dadurch gekennzeichnet, dass** das elektrisch leitende Material und/oder das Verstärkungselement (5) von dem Schlauchinneren (3) durch eine Verschleißschicht (12) getrennt sind.

3. Schlauchleitung nach einem der Ansprüche 1 oder 2, **dadurch gekennzeichnet, dass** die Schlauchleitung (1) eine helixförmig verlaufende Werkstoffbahn (4) aufweist, die die Schlauchwandung (2) bildet und ein helixförmig verlaufendes Verstärkungselement (7) aufweist, das an oder in der Schlauchwandung (2) befestigt ist.

4. Schlauchleitung nach einem der vorhergehenden Ansprüche **dadurch gekennzeichnet, dass** das elektrisch leitende Material einen Metalldraht, vorzugsweise eine Litze, und/oder einen elektrisch leitfähigen Kunststoff umfasst.

5. Schlauchleitung nach einem der vorhergehenden Ansprüche **dadurch gekennzeichnet, dass** das elektrisch leitende Material in radialer Richtung näher zur Schlauchachse (10) liegt als das Verstärkungselement (5).

6. Schlauchleitung nach einem der vorhergehenden Ansprüche **dadurch gekennzeichnet, dass** das Verstärkungselement (5) und das elektrisch leitende Material durch eine Isolierschicht voneinander getrennt sind.

7. Verfahren zur Herstellung einer Werkstoffbahn (4) für eine Schlauchleitung (1) aus thermoplastischem Kunststoff für abrasive Medien insbesondere nach einem der vorhergehenden Ansprüche,
wobei eine Kunststoffschmelze in einen Extrusionskopf (14) zur Bildung einer extrudierten Werkstoffbahn (4) geleitet wird und ein elektrisch leitfähiges Verstärkungselement (5) beim Extrudieren der Werkstoffbahn (4) mit der Werkstoffbahn (4) verbunden wird;
**dadurch gekennzeichnet, dass** ein elektrisch leitendes Material zur Bildung einer Einlage (7) in der Werkstoffbahn (4) in den Extrusionskopf (14) geleitet und beim Extrudieren der Werkstoffbahn (4) in einem definierten Abstand zum Verstärkungselement (5) in die Werkstoffbahn (4) eingebracht wird.

8. Verfahren nach Anspruch 7, **dadurch gekennzeichnet, dass** die Einlage (5) aus elektrisch leitfähigem thermoplastischem Kunststoff besteht, wobei die Werkstoffbahn (4) und die Einlage (7) durch Coextrusion zusammengeführt werden.

9. Verfahren nach Anspruch 7, **dadurch gekennzeichnet, dass** der elektrische Leiter aus Metalldraht, vorzugsweise einer Litze, besteht.

10. Verfahren zur Herstellung einer Schlauchleitung (1) für abrasive Medien, insbesondere nach einem der Ansprüche 1 bis 6, wobei eine extrudierte Werkstoffbahn aus thermoplastischem Kunststoff helixförmig zur einer Schlauchleitung aufgewickelt wird und benachbarte Längskantenabschnitte der Werkstoffbahn überlappend miteinander verbunden werden,
wobei ein elektrisch leitfähiges Verstärkungselement (5) mit dem Kunststoff derart verbunden wird, dass sich das Verstärkungselement (5) helixförmig in Schlauchrichtung (6) erstreckt,
**dadurch gekennzeichnet, dass** ein elektrisch leitendes Material (7) an der Schlauchleitung derart angebracht wird, dass es sich beabstandet zum Verstärkungselement (5) in Schlauchrichtung (6) erstreckt, wobei zumindest eines von dem Verstärkungselement (5) und dem elektrisch leitenden Material (7) an der extrudierten Werkstoffbahn angebracht wird.

11. Verfahren nach Anspruch 10, **dadurch gekennzeichnet, dass** das eine von dem Verstärkungselement (5) und dem elektrisch leitenden Material (7) bei der Extrusion der Werkstoffbahn mit dieser verbunden wird und das andere von dem Verstärkungselement (5) und dem elektrisch leitenden Material (7) an der extrudierten Werkstoffbahn angebracht wird.

12. Verfahren nach Anspruch 10 oder 11, wobei die Schlauchleitung zumindest abschnittsweise aus mehreren Kunststoffschichten gebildet wird, **dadurch gekennzeichnet, dass** das Verstärkungselement (5) und/oder das elektrisch leitende Material (7) zumindest teilweise zwischen zwei Kunststoffschichten eingebracht werden.

13. Vorrichtung zur Herstellung von Schlauchleitungen (1) aus thermoplastischem Kunststoff mit einem zumindest teilweise in die Schlauchwandung (2) eingebetteten Verstärkungselement (5),
mit einem Extrusionskopf (14) zum Extrudieren einer Werkstoffbahn (4), wobei der Extrusionskopf (13) wenigstens einen Zufuhrkanal (18) für fließfähigen Kunststoff aus wenigsten einem Extruder (17) aufweist, wobei das Verstärkungselement (5) in den Extrusionskopf (14) geführt wird, um das Verstärkungselement (5) beim Extrudieren der Werkstoffbahn (4) zumindest teilweise in den Kunststoff einzubetten; und
einem ersten Führungsabschnitt (19), der dazu eingerichtet ist, das Verstärkungselement (5) in dem Extrusionskopf (14) zu führen, so dass das Verstärkungselement (5) in einer definierten Lage in den Kunststoff integriert wird;
**gekennzeichnet durch** einen zweiten Führungsabschnitt (20) für einen elektrischen Leiter (7), der in den Extrusionskopf (14) geleitet wird, um zumindest teilweise in den Kunststoff eingebettet zu werden, wobei der zweite Führungsabschnitt (20) derart ausgebildet ist, dass der elektrische Leiter (7) entlang der Werkstoffbahn (4) in einem definierten Abstand zum Verstärkungselement (5) in den Kunststoff eingebettet wird.

14. Vorrichtung nach Anspruch 13, **dadurch gekennzeichnet, dass** der erste und zweite Führungsabschnitt (19, 20) vorzugsweise parallel zueinander angeordnete Durchführungen für das Verstärkungselement (5) und den elektrischen Leiter (7)umfassen.

15. Vorrichtung nach Anspruch 13 oder 14, **dadurch gekennzeichnet, dass** die Werkstoffbahn (4) als Profilfahne extrudiert wird.
